# DEMANDE DE BREVET EUROPEEN

(11) **EP 4 478 656 A1**
(43) Date de publication de la demande: **18.12.2024**
(21) Numéro de dépôt: 24182042.2
(22) Date de dépôt: 13.06.2024
(51) Int. Cl.: H04L 9/32, H04L 9/40, H04B 10/118

(54) **METHODE ET SYSTEME DE GESTION DE CLES POUR L'ETABLISSEMENT DE COMMUNICATIONS SECURISEES ENTRE UN CENTRE DE CONTROLE DE SATELLITE ET UN SATELLITE**

(30) Priorité: 15.06.2023 FR 2306094
(71) Demandeur: THALES, 92190 Meudon (FR)
(72) Inventeur: TRANIER, Benoît, 31037 TOULOUSE Cedex 1 (FR)
(74) Mandataire: Atout PI Laplace

(57) **Abrégé**

La présente invention propose un procédé de gestion de clés pour établir des communications sécurisées entre un centre de contrôle sol et un satellite en orbite. Dans une phase où le satellite est au sol, le procédé permet d'opérer un protocole de cryptographie asymétrique avec une autorité de certification permettant de déployer sur un équipement cryptographique du centre de contrôle sol, une clé privée sol et un certificat signé par l'autorité de certification, contenant une clé publique sol ; et sur un équipement cryptographique du satellite au sol, un certificat auto-signé par l'autorité de certification, contenant une clé publique AC de l'autorité de certification. Dans une phase où le satellite est en orbite, le procédé permet d'opérer un protocole d'authentification semi-mutuelle entre le centre de contrôle sol et le satellite, en authentifiant le satellite par une ou plusieurs caractéristiques physiques identifiant le satellite.

## Description

### Domaine Technique

La présente invention concerne le domaine spatial des communications entre un centre de contrôle de satellites localisé sur Terre et des satellites en orbite. L'invention s'intéresse plus spécifiquement à la sécurité de telles communications.

### Etat de la technique

Dans le domaine général des communications, il est reconnu que la sécurité des communications entre deux parties repose sur trois facteurs fondamentaux que sont la disponibilité d'un canal de communication, la confidentialité des messages échangés et l'authenticité des messages échangés (authentification de la source des messages et intégrité des messages).

Il est répandu deux approches pour sécuriser les communications entre deux parties A et B, généralement désignées par Alice et Bob : la cryptographie à clé publique/privée ou cryptographie asymétrique, et la cryptographie à clé secrète symétrique.

Dans le domaine particulier des communications spatiales, les principes de sécurité doivent être respectés. Pour tout lien de communication entre un centre de contrôle de satellite (CCS) localisé sur Terre (aussi désigné comme segment sol de contrôle) et un satellite en orbite, il doit être garanti la disponibilité du canal de transmission, la confidentialité et l'authenticité des messages échangés.

La présente invention s'intéresse spécifiquement à l'authenticité et la confidentialité des messages échangés entre un segment sol de contrôle et un satellite.

A ce jour, les systèmes spatiaux basent la sécurité de leur communication bord-sol sur une cryptographie à clé secrète symétrique.

De manière connue, lors d'échanges sécurisés sur internet, dénotés https://, la cryptographie à clé secrète symétrique permet à deux parties, généralement désignées par Alice et Bob, de sécuriser leur communication. La clé secrète est négociée à partir d'éléments publics échangés entre Alice et Bob et d'éléments privés qui leur sont propres et connus d'eux seuls. Ces éléments publics/privés sont produits sur le moment, ils sont donc "éphémères". L'authentification d'Alice et de Bob repose sur la mise en place de certificats, signés par une autorité tierce de confiance, qui contiennent respectivement leur clé publique. Ces certificats publics sont délivrés par une autorité de certification (AC) de confiance qui garantit la validité et l'authenticité des certificats. Cette infrastructure dite (PKI) pour « Public Key Infrastructure » selon l'anglicisme, consacrée permet de créer des clés secrètes partagées, à la demande et au moment où elles sont requises par Alice et Bob. Néanmoins, ce type d'infrastructure n'affranchit pas Alice et Bob d'avoir en permanence un secret persistant, qui est leur clé privée respective.

Pour les communications des systèmes spatiaux actuels, la cryptographie à clé secrète symétrique est aussi utilisée pour sécuriser les échanges entre le segment sol de contrôle et le satellite, à ceci près que l'établissement de la clé secrète ne repose pas sur une PKI et nécessite que le segment sol de contrôle et le satellite disposent de clés secrètes pré-partagées et connues d'eux seuls.

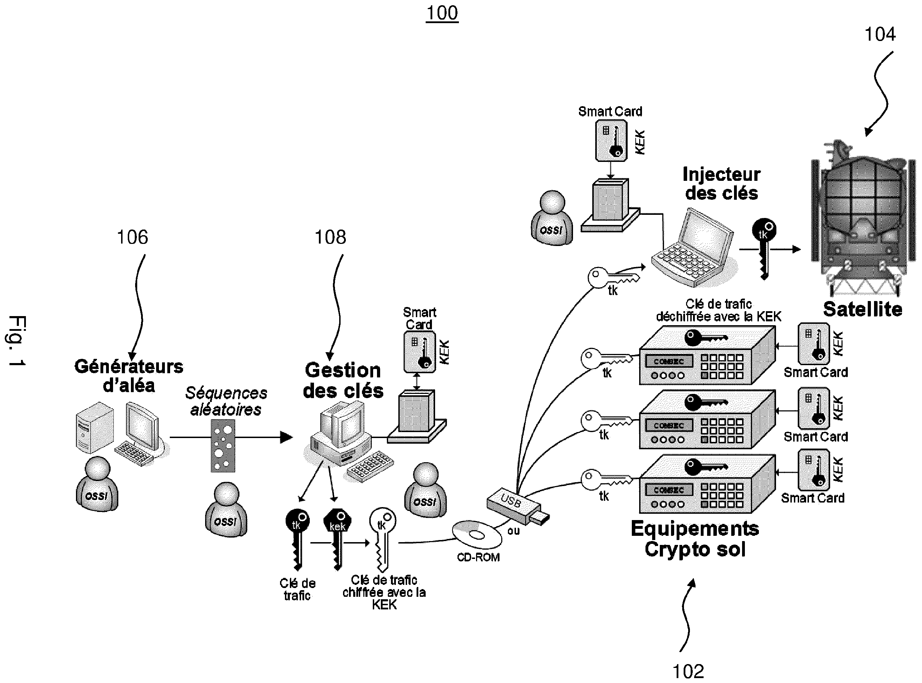

Une infrastructure pour la gestion de clés à clés secrètes, d'acronyme (IGC) ou (SKI) pour « Secret Key Infrastructure » selon l'anglicisme consacré, est montrée de manière schématique sur la figure 1.

L'exemple illustré de l'infrastructure 100 permet de produire au sol et distribuer dans des équipements de chiffrement/déchiffrement sol 102 et dans un satellite 104 avant sa mise en orbite, des clés secrètes de chiffrement pour les échanges de données de télémétrie TM et de données de télécommande TC.

L'infrastructure permet de distribuer des clés secrètes, depuis des équipements de génération de clés (générateurs d'aléa) 106 et de gestion de clés 108, jusque dans les équipements cryptographiques sol 102 et dans le satellite 104 avant sa mise en orbite, et ce via différents support (CD-ROM, clé USB, Smart-Card, injecteurs de clés, ...).

Cette infrastructure nécessite une mise en place au sol d'une chaîne de distribution « à la main » de confiance qui est lourde et qui repose à la fois sur des mesures organisationnelles et sur des personnels accrédités, tels que l'OSSI (Officier de la Sécurité des Systèmes d'information). Elle requière la mise en place de mesures de sécurité contraignantes : habilitation des personnes, homologation des équipements de production et de distribution des clés, etc.

De plus, une telle infrastructure ne permet pas de respecter toutes les règles et les bonnes pratiques en termes de gestion de clés secrètes. Ainsi, par exemple, le principe selon lequel « *une clé secrète doit être créée au moment où le système en a besoin afin qu'elle ne soit exposée que le temps nécessaire lors de son utilisation »,* n'est pas respecté dans le cas des systèmes spatiaux, car les clés secrètes sont générées au tout début d'une mission tant que le satellite est au sol, et sont générées une fois pour toute la durée de vie du satellite en orbite (soit entre 10 et 20 ans).

Une autre règle peu ou pas respectée par ce type d'infrastructure est relative au fait que « la sécurité d'une clé secrète ne doit pas dépendre de la sécurité des autres clés secrètes utilisées précédemment lors des opérations de chiffrement ou déchiffrement ». On identifie ici la notion de persistance de la confidentialité ou PFS pour « Prefect Forward Secrecy » en anglais.

Enfin, ce type d'infrastructure reste limité à des systèmes ayant peu de satellites à opérer et peu d'équipements déployés au sol.

Aussi, ce type d'infrastructure (SKI) impose des contraintes opérationnelles lourdes pour garantir la confidentialité des clés pour toute la durée de vie du système, entre autres des contraintes pour garantir la confidentialité et l'intégrité des clés chargées dans le satellite, pendant toute la phase qui précède le tir sur le site de lancement. En effet, la contrainte d'un secret initial (une clé secrète symétrique ou même une clé privée) reste forte pour les systèmes spatiaux, surtout au niveau du satellite lorsque celui si se trouve soit sur un site industriel, soit en phase de transport, soit sur un site de lancement.

Ainsi, face à ces limitations et ces inconvénients, il existe un besoin de disposer d'une solution de gestion de clés de chiffrement, qui permet, de manière simple, à des opérateurs de solutions spatiales devant gérer un ou une pluralité de satellites, de sécuriser des liaisons bord-sol entre un/des satellite(s) et leur segment sol de contrôle.

La présente invention répond à ce besoin.

### Résumé de l'invention

Un objet de la présente invention est de résoudre la problématique de distribution de clés secrètes de chiffrement/déchiffrement des télécommandes et télémesures échangées entre un segment sol de contrôle et un satellite en orbite. En effet, l'établissement initial de clés secrètes pose le problème de l'authentification initiale du segment sol de contrôle vis-à-vis du satellite, et l'authentification initiale du satellite vis-à-vis du segment sol de contrôle.

Avantageusement, le procédé de l'invention permet de s'affranchir de la présence d'un secret initial dans le satellite pendant toute la phase de préparation de ce dernier jusqu'au tir.

Avantageusement, la présente invention permet de s'affranchir, pour un satellite, de la nécessité d'embarquer un secret initial (une clé secrète symétrique ou une clé privée) avant sa mise en orbite, et repose sur un protocole de négociation de clés secrètes avec authentification semi-mutuelle.

La solution proposée se base sur une infrastructure de gestion de clés basée sur la mise en place de certificats publics (non secrets) signés numériquement (PKI), de l'emploi d'une cryptographie à clés publique/privée (i.e. cryptographie asymétrique) pour la signature des certificats et pour la négociation des clés secrètes, et sur une authentification d'un satellite en orbite qui s'appuie uniquement sur des paramètres physiques uniques de ce dernier, comme par exemple sa position orbitale.

L'infrastructure de gestion de clés de l'invention repose sur les principes d'une infrastructure de type PKI, mais où, en contraste et contre toute attente selon les infrastructures PKI classiques, le satellite concerné n'embarque avec lui qu'un certificat auto-signé d'une autorité de certification (AC) avec une clé publique de l'AC, qui elle n'est pas confidentielle.

Selon l'infrastructure PKI de la présente invention, un équipement cryptographique sol (en général partie du centre de contrôle) produit un couple « clé publique / clé privée ». La clé publique est transmise à une AC afin qu'elle soit insérée dans un certificat signé par l'AC (i.e. avec la clé privée de l'AC). A la fin de cette phase préparatoire de mise en place de certificats, avantageusement le satellite est dépourvu d'éléments sensibles, car il ne possède que la clé publique de l'AC.

Une fois le satellite lancé, le centre de contrôle sol peut lui envoyer son certificat sol en cours de validité. Le satellite peut vérifier l'authenticité de ce certificat sol en le contresignant avec la clé publique de l'AC qu'il possède. La fonction cryptographique du satellite et l'équipement cryptographique sol peuvent ensuite échanger des paramètres publics (non sensibles), générés sur le moment, et qui leur permettent de produire une clé secrète partagée.

L'authentification des messages envoyés par le centre de contrôle sol est alors réalisée par l'intermédiaire de la signature au sol avec la clé privée et de la contre-signature (i.e. la vérification d'authentification) à bord avec la clé publique du sol (celle qui était présente dans le certificat envoyé par le sol).

Avantageusement, l'authentification du satellite par le centre de contrôle ne fait pas intervenir de mécanisme cryptographique, mais des paramètres physiques identifiant sans doute possible le satellite.

Dans un des modes de réalisation possibles, l'authentification du satellite se base sur les éphémérides du satellite opéré, et sur le fait qu'un centre de contrôle les connaît à tout instant, ces dernières étant uniques et propres à tout objet en orbite autour de la Terre.

D'autres modes d'authentification du satellite peuvent être envisagés comme par exemple, une identification par analyse d'empreinte RF du modulateur de messages TM ou encore d'une balise.

Avantageusement, le procédé de l'invention permet une gestion de clés qui n'impose pas de positionner un secret initial dans un satellite au sol, avant sa mise en orbite. Ainsi, le procédé de l'invention permet une simplification drastique des opérations de gestion des clés sur toute la durée de vie d'un système spatial.

L'invention s'applique aux systèmes spatiaux pour lesquels il est requis, par un utilisateur final, d'avoir des liens de communication bord-sol sécurisés. Ceci est le cas pour tous les systèmes spatiaux actuels qu'ils soient civils ou militaires.

Avantageusement la mise en place de l'invention, évite à un utilisateur final de prendre à son compte la gestion complexe d'une infrastructure de clé secrète au sol (SKI). Cette gestion reste du ressort de l'industriel qui livrera au client final les éléments lui permettant de sécuriser les liens bord-sol de son système en toute simplicité : certificats de l'autorité de certification, certificats des équipements cryptographiques sol et fonctions cryptographiques de signature et de négociations des clés secrètes.

Les systèmes spatiaux visés sont essentiellement les satellites de télécommunication géostationnaires pour des opérateurs de satellites civils ou de satellites commerciaux. Cependant, la méthode peut être étendue à d'autres systèmes spatiaux (constellation en orbite basse) du moment que les opérations du système ne sont pas affectées outre-mesure.

L'invention permet de respecter les règles de bases concernant la gestion des clés secrètes, i.e. utilisation de clé "fraiche" et garantie de la confidentialité persistante à la compromission d'une clé passée. Elle permet ainsi de réduire le risque de compromission des clés secrètes utilisées tout au long de la durée de vie du système spatial.

Pour obtenir les résultats recherchés, il est proposé un procédé de gestion de clés pour établir des communications sécurisées entre un centre de contrôle sol et un satellite en orbite, le procédé comprenant des étapes consistant :
- dans une phase où le satellite est au sol, à opérer un protocole de cryptographie asymétrique avec une autorité de certification, permettant de déployer :
   - sur un équipement cryptographique du centre de contrôle sol, une clé privée sol et un certificat signé par l'autorité de certification, contenant une clé publique sol ; et
   - sur un équipement cryptographique du satellite au sol, un certificat auto-signé par l'autorité de certification, contenant une clé publique AC de l'autorité de certification ;
- dans une phase où le satellite est en orbite, à opérer un protocole d'authentification semi-mutuelle, entre le centre de contrôle sol et le satellite en orbite, consistant :
   - pour l'équipement cryptographique du centre de contrôle sol : à authentifier le satellite par une ou plusieurs caractéristiques physiques identifiant le satellite ; à envoyer vers ledit satellite authentifié, un message signé avec la clé privée sol, ledit message contenant le certificat auto-signé par l'autorité de certification et la clé publique sol ; et
   - pour l'équipement cryptographique du satellite en orbite : à authentifier le certificat reçu de l'équipement cryptographique du centre de contrôle sol, à l'aide de la clé publique AC de l'autorité de certification.

Dans une phase d'établissement ou d'échange d'une clé secrète entre le satellite et le centre de contrôle sol, les messages envoyés par le centre de contrôle sol sont signés avec la clé privée du centre de contrôle sol et contresignés par le satellite avec la clé publique du centre de contrôle sol. Le satellite en orbite, source des messages envoyés au centre de contrôle au sol, est authentifié par une de ses caractéristiques physiques, ce qui authentifie implicitement les messages envoyés par le satellite au centre de contrôle au sol.

L'invention propose plusieurs modes de réalisation séparés ou combinés.

Ainsi l'étape d'opérer un protocole de cryptographie asymétrique avec une autorité de certification comprend :
- une étape où l'autorité de certification produit une paire de clés AC publique/privée (clé publique AC, clé privée AC) ;
- une étape où l'autorité de certification constitue un certificat auto-signé avec ladite clé privée AC, et contenant ladite clé publique AC ; et
- une étape où ledit certificat auto-signé est transmis d'une part à l'équipement cryptographique sol et d'autre part à l'équipement cryptographique du satellite au sol.

Le procédé comprend de plus :
- une étape où l'équipement cryptographique sol : produit une paire de clés sol publique/privée (clé publique sol, clé privée sol) ; et transmet ladite clé publique sol à l'autorité de certification ;
- une étape où l'autorité de certification : intègre la clé publique sol reçue dans un certificat ; le signe avec ladite clé privée AC ; et transmet le certificat signé à l'équipement cryptographique sol.

Dans un mode de réalisation, l'autorité de certification est apte à opérer des fonctions d'enregistrement de clés.

Dans une réalisation, l'étape d'authentifier le satellite par une ou plusieurs caractéristiques physiques, consiste à authentifier ledit satellite par ses éphémérides, en authentifiant des paramètres liés à sa position orbitale, notamment l'azimut et l'élévation.

Dans une variante, l'étape d'authentifier le satellite par une ou plusieurs caractéristiques physiques, consiste à authentifier ledit satellite par des caractéristiques d'un signal modulé émis par un émetteur de télémesure ou par une balise du satellite visé.

Dans une autre variante, l'étape d'authentifier le satellite par une ou plusieurs caractéristiques physiques, consiste à authentifier ledit satellite par un doppler d'un signal modulé descendant.

Dans une autre variante, l'étape d'authentifier le satellite par une ou plusieurs caractéristiques physiques, consiste à authentifier ledit satellite par une signature thermique du satellite.

Le procédé comprend de plus, après l'authentification semi-mutuelle entre le centre de contrôle sol et le satellite en orbite, des étapes consistant en l'établissement ou l'échange de clés secrètes entre le centre de contrôle sol et le satellite authentifié.

L'invention couvre aussi un dispositif de gestion de clés pour établir des communications sécurisées entre un centre de contrôle sol et un satellite en orbite, le dispositif comprenant des moyens pour mettre en oeuvre les étapes du procédé de l'invention.

L'invention adresse aussi un programme d'ordinateur comprenant des instructions de code qui, lorsque le programme est exécuté par un ordinateur, conduisent celui-ci à mettre en oeuvre le procédé de l'invention.

### Brève Description des Dessins

D'autres caractéristiques et avantages de la présente invention apparaîtront mieux à la lecture de la description qui suit en relation aux dessins suivants :
La figure 1 illustre une infrastructure connue de gestion de clés à clés secrètes (SKI) pour les communications de systèmes spatiaux ;
La figure 2 illustre une infrastructure connue de gestion de clés à clé publique (PKI) pour les communications internet ;
La figure 3 illustre une infrastructure de gestion de clés à clé publique (PKI) pour les communications des systèmes spatiaux, selon un mode de réalisation de l'invention ;
La figure 4 illustre de manière schématique le principe général d'un procédé d'authentification selon un mode de réalisation de l'invention ;
La figure 5 illustre de manière schématique l'établissement ou l'échange de clés secrètes entre un satellite en orbite et un équipement sol, selon un mode de réalisation de l'invention.

### Description détaillée de l'invention

II est d'abord fait quelques rappels sur différents principes généraux et connus de cryptographie.

Dans les systèmes d'information, la sécurité des communications est assurée par le biais d'algorithmes cryptographiques. Un algorithme cryptographique permet de transformer des données initiales en données finales qui peuvent avoir des objectifs différents. La cryptographie permet de garantir la confidentialité et l'authenticité de messages. Par algorithme cryptographique, il est visé toute fonction sûre qui garantit que, par tout type d'attaque informatique (cryptanalyse, prédiction, puissance de calcul, etc.) il n'est pas possible de contourner les mécanismes de sécurité mis en place.

### La cryptographie à clé secrète symétrique :

Pour assurer la confidentialité des messages qu'ils vont s'échanger, Alice et Bob doivent disposer des éléments suivants :
- une primitive cryptographique de chiffrement des messages pour Alice appelée **E_{K}** ;
- une primitive cryptographique de déchiffrement des messages pour Bob appelée **D_{K}** ;
- une clé secrète symétrique **K** connue uniquement d'Alice et de Bob.

Alice utilise la clé secrète K et la primitive E_{K} pour chiffrer son message clair initial. Le message chiffré peut être transmis à Bob et ne sera pas compréhensible pour toute personne qui ne possède pas la clé secrète K qui permettrait de déchiffrer le message.

Bob, lorsqu'il reçoit le message chiffré envoyé par Alice, peut le déchiffrer en utilisant la primitive D_{K} et la clé secrète K pour en extraire le message clair initialement construit par Alice.

La confidentialité des messages échangés entre Alice et Bob repose sur le fait que seuls Alice et Bob disposent d'une clé secrète commune partagée.

Un premier problème qui se pose est celui du partage de la clé secrète entre Alice et Bob. Ce besoin d'un secret commun partagé nécessite qu'Alice et Bob se rencontrent au moins une fois pour échanger, à l'abri des regards indiscrets, la clé secrète. La problématique de la distribution/échange des clés secrètes reste un problème majeur dans la sécurité des communications. Par contre, le fait de se rencontrer permet à Alice et Bob de s'authentifier mutuellement lors de l'échange initial de la clé secrète. Ce qui permet au moins de résoudre la phase de l'authentification initiale.

La cryptographie utilisée ici s'appelle cryptographie à clé secrète symétrique ou abusivement « cryptographie symétrique ».

Pour assurer l'authenticité des messages, Alice et Bob doivent disposer des éléments suivants :
- une fonction de hachage à sens unique pour Alice et pour Bob ;
- une primitive de chiffrement des messages pour Alice appelée **E_{K}** ;
- une primitive de déchiffrement des messages pour Bob appelée **D_{K}** ;
- une clé secrète symétrique **K** connue uniquement d'Alice et de Bob.

Alice utilise une fonction de hachage à sens unique qui produit un résumé de son message clair initial. Ensuite, Alice utilise la clé secrète K pour chiffrer le résumé du message clair initial en utilisant la primitive E_{K}. Elle peut ensuite envoyer le message clair et le résumé chiffré à Bob.

Bob utilise la même fonction de hachage qu'Alice pour calculer le résumé du message clair reçu. Ensuite, il utilise la même clé secrète K et la primitive D_{K} pour déchiffrer le résumé du message initial. Bob obtient ainsi deux résumés de message qu'il peut comparer.

Si les deux résumés de message obtenus par Bob sont strictement identiques, alors Bob aura deux certitudes :
- le message qu'il vient de recevoir est intègre (grâce à la fonction de hachage),
- le message qu'il vient de recevoir provient bien d'Alice (grâce à l'opération de chiffrement/déchiffrement avec la clé secrète K connue d'Alice et de Bob uniquement).

Alice et Bob disposent désormais de moyens sûrs pour échanger des messages tout en garantissant l'authenticité des messages et la confidentialité de ceux-ci. Ils doivent néanmoins se rencontrer pour se mettre d'accord ou s'échanger une clé secrète commune qui est un préalable obligatoire.

### La cryptographie à clé publique/privée :

La cryptographie à clé publique/privée repose sur le principe que les deux parties Alice et Bob vont devoir utiliser des clés différentes pour les opérations de chiffrement et les opérations de déchiffrement.

On considère que Bob a, à sa disposition, deux clés qui sont complémentaires :
- une clé dite "publique" qui par définition n'est pas sensible, et que Bob peut envoyer à Alice via un canal non confidentiel (i.e. canal clair) ;
- une clé dite "privée" qui est sensible et qui doit rester impérativement connue que de lui seul. Cette clé ne doit jamais être communiquée, même pas à Alice. Elle est personnelle à Bob.

Pour assurer la confidentialité des échanges, Alice chiffre son message avec la clé publique que Bob lui a transmise préalablement. Le message chiffré peut ensuite être envoyé à Bob qui peut le déchiffrer avec sa clé privée (qui est la seule clé cohérente de sa clé publique, celle utilisée par Alice pour le chiffrement). Un tiers « Eve » pourra tenter de déchiffrer le message chiffré avec la clé publique de Bob (qu'elle aura interceptée), mais elle obtiendra un message inintelligible puisqu'elle n'a pas utilisé la clé privée (connue de Bob uniquement) qui est la seule clé qui permet de retrouver le message clair initial.

L'avantage apporté par la cryptographie asymétrique est que Bob a pu transmettre à Alice sa clé publique via un canal non confidentiel. Mais la phase d'authentification initiale qui apporterait la garantie à Alice que la clé envoyée par Bob est bien celle de Bob, n'a pas été résolue.

Il est possible d'utiliser la cryptographie asymétrique pour ajouter l'authenticité des messages. Alice doit posséder sa propre paire de clé publique/privée, qu'on appelle aussi une bi-clé. Elle a préalablement transmis sa clé publique à Bob et a conservé secrète sa clé privée qui lui est propre.

Alice chiffre le message qu'elle veut envoyer à Bob avec la clé publique de Bob. Mais cette fois-ci, elle calcule aussi un résumé du message clair initial à l'aide d'une fonction de hachage à sens unique, pour ensuite chiffrer ce résumé avec sa propre clé privée connue d'elle seule.

Alice envoie ensuite à Bob :
- le résumé chiffré du message clair initial (chiffré avec la clé privée d'Alice) ;
- le message chiffré avec la clé publique de Bob.

Bob peut alors effecteur les opérations suivantes :
- déchiffrer, avec la clé publique d'Alice, le résumé chiffré du message clair initial qu'il a reçu ;
- déchiffrer, avec sa clé privée, le message chiffré reçu pour obtenir le message déchiffré (qui est à priori identique au message clair initial d'Alice) ;
- calculer, avec la même fonction de hachage à sens unique que celle utilisée par Alice, le résumé du message déchiffré.

Si les deux résumés de message obtenus par Bob sont strictement identiques, alors Bob aura deux certitudes :
- le message qu'il vient de recevoir est intègre,
- le message qu'il vient de recevoir provient bien d'Alice.

Ainsi, l'authenticité des messages obtenue par le biais de la cryptographie asymétrique va un peu plus loin que celle obtenue par le biais de la cryptographie symétrique. Comme Alice possède une clé privée différente de cette de Bob, l'intégrité des messages envoyée par Alice est rattachée à sa clé privée. Ce qui en fait des motifs d'intégrité particuliers qui, sont nommés dans ce cas précis « signature numérique ».

A la différence du mécanisme d'authenticité de la cryptographie symétrique, qui produit un motif d'intégrité cryptographique attaché à la clé secrète partagée par Alice et par Bob, le processus d'authenticité de la cryptographie asymétrique est rattaché à une seule des deux clés privées, ce qui justifie de parler de « signature numérique » plutôt que de motif d'intégrité cryptographique.

Si Bob conserve le message chiffré et surtout le résumé de message chiffré avec la clé privé d'Alice, cela vaut pour lui comme preuve que le message a bien été envoyé par Alice dans le sens où, étant la seule à posséder sa clé privée, Alice est la seule à pouvoir produire une signature qui pourra être contrevérifiée avec la clé publique que Bob possède. On parle ici de mécanisme de non répudiation que permet la cryptographie asymétrique et que ne permet pas la cryptographie à clé secrète symétrique.

Grâce à la cryptographie asymétrique, Alice et Bob ont ainsi un moyen qui permet d'instancier la notion de signature numérique. Néanmoins, ce schéma reste entaché d'un point faible qui est le suivant : comment Alice peut garantir à Bob que la clé publique qu'elle lui envoie est bien sa clé publique et inversement ? Pour le vérifier, Alice et Bob pourraient se rencontrer physiquement pour échanger leur clé publique. Or cela n'apporte pas plus que ce que propose la cryptographie à clé secrète symétrique. Il reste alors à résoudre en cryptographie asymétrique, le problème de l'authentification initiale qui permet de garantir à Alice qu'elle communique bien avec Bob et inversement.

Dans le domaine de la sécurité des systèmes d'information, cette problématique d'authentification initiale pour l'échange initial des clés publiques est résumée à une attaque très bien connue dite l'attaque de l'homme du milieu ou « Man In The Middle attack » en anglais. Cette attaque consiste, pour un tiers désigné « Eve », à s'intercaler entre Alice et Bob au niveau du canal de communication et à usurper l'identité d'Alice et de Bob

Lorsqu'Alice envoie sa clé publique à Bob, Eve la récupère et envoie à Bob sa propre clé publique ; Bob croit recevoir la clé publique d'Alice alors qu'il reçoit celle d'Eve. Ensuite, lorsque Bob envoie sa clé publique à Alice, Eve la récupère et envoie à Alice sa propre clé publique ; Alice croit recevoir la clé publique de Bob alors qu'elle reçoit celle d'Eve.

Cette attaque est possible car Alice et Bob ne disposent pas encore d'un moyen fiable pour réaliser la phase de l'authentification initiale. Cette phase est cruciale dans toute communication.

Par la suite, chaque fois qu'Alice chiffrera un message, elle utilisera, sans le savoir, la clé publique d'Eve qui pourra aisément le déchiffrer avec sa clé privée. Eve pourra ensuite modifier et "rechiffrer" le nouveau message en utilisant la clé publique de Bob, avant de l'envoyer à Bob qui le déchiffrera avec sa propre clé privée pensant que c'est Alice qui l'a chiffré avec la clé publique de Bob.

Pour la signature, Alice "signera numériquement" son message avec sa clé privée. Mais Eve remplacera la signature d'Alice par la sienne (réalisée avec sa propre clé privée). Bob, lorsqu'il recevra le message signé, le contresignera avec la clé publique d'Eve, pensant utiliser celle d'Alice. Eve sera aussi capable d'intercepter les messages envoyés dans l'autre sens (ceux envoyés par Bob à Alice) pour se faire passer pour Bob aux yeux d'Alice.

Cette attaque redoutée par les spécialistes de la sécurité des systèmes d'information, est imparable tant qu'Alice et Bob ne disposent pas d'un moyen sûr pour effectuer l'authentification initiale qui leur permettrait alors de déjouer une attaque de l'homme du milieu.

Pour échapper à la menace d'une attaque de l'homme du milieu, une solution consiste en ce qu'Alice et Bob s'appuient sur une infrastructure de gestion de clés à clé publique (ICP) ou (PKI) pour "Public Key Infrastructure" en anglais.

Une PKI se base sur les mécanismes de signature numérique que permet la cryptographie asymétrique et sur la mise en place de certificats signés numériquement par une entité tierce (externe à Alice, à Bob et à Eve) dite entité ou tiers « de confiance ».

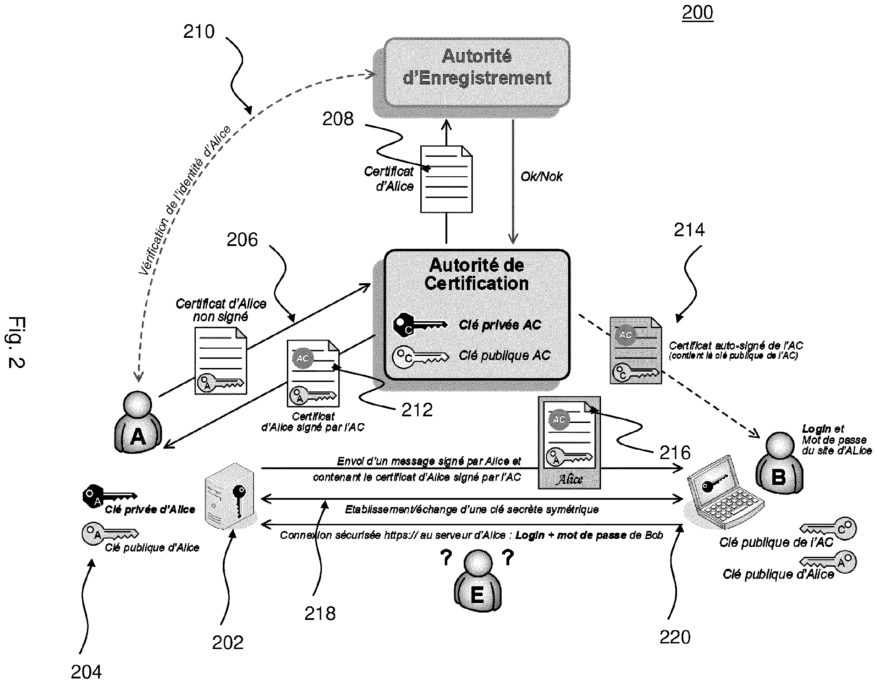

La figure 2 illustre de manière simplifiée le mécanisme opérationnel d'une infrastructure PKI pour un exemple où Alice (A) souhaite développer un commerce en proposant un service de vente en ligne sur internet. Pour ce faire, elle doit déployer un serveur 202 qui doit donner des garanties d'authenticité (au sens authenticité de la source) à tous ces futurs clients en ligne, dans l'exemple Bob (B). Lorsqu'un client se connectera au serveur d'Alice, il devra être certain que c'est bien au serveur d'Alice qu'il se connecte et pas sur un serveur frauduleux qui aurait été mis en place par Eve (E) pour récupérer des informations sensibles (par exemple des numéros de cartes bancaires).

Afin de garantir à ses clients l'authenticité de son serveur, Alice demande à son serveur de produire un couple de clé publique/privée 204 (une bi-clé). Ensuite, elle constitue un dossier pour faire la demande d'un certificat qui l'autorisera à connecter son serveur sur le web. Elle envoie 206 à une Autorité de Certification (AC) sa clé publique avec l'ensemble des informations liées à son activité commerciale : numéro de Siret de sa société, preuve de dépôt légal et autres documents officiels.

L'AC va propager 208 la demande d'Alice vers une Autorité d'Enregistrement (AE) qui va contacter Alice par un autre canal 210 pour vérifier qu'elle est bien la personne (ou l'entité commerciale) qu'elle prétend être. Une fois cette vérification effectuée, l'AE donne son feu vert à l'AC pour que cette dernière constitue le certificat contenant la clé publique d'Alice et le signe avec sa clé privée AC connue d'elle seule. Une fois qu'Alice a reçu son certificat signé par l'AC 212 et qui contient sa clé publique, elle peut connecter son serveur à internet.

Bob (B) peut alors se connecter au serveur d'Alice en toute confiance. Pour s'assurer que, lorsqu'il se connectera au serveur d'Alice, il sera bien connecté à celui-ci et pas à un serveur frauduleux, Bob sait que son navigateur internet, qui a été installé en même temps que son système d'exploitation OS, contient déjà un panel de plusieurs certificats issus d'autorités de certification diverses et variées, mais toutes reconnues comme étant de confiance. Il trouvera, entre autres, le certificat 214 auto signé de l'AC qui a aussi signé le certificat d'Alice.

Lorsque Bob se connectera au serveur d'Alice, ce dernier lui enverra un message 216 signé avec la clé privée d'Alice et qui contient le certificat d'Alice (avec sa clé publique) signé par l'AC. L'ordinateur de Bob effectuera quelques vérifications pour authentifier le message et aussi le certificat qu'il contient : il contresignera le certificat reçu avec la clé publique de l'AC dont il dispose pour vérifier que le certificat est authentiquement celui d'Alice et pas un certificat contrefait par Eve ; il contresignera le message reçu avec la clé publique d'Alice pour vérifier que c'est bien le serveur d'Alice (le seul à disposer de la clé privée) qui a envoyé le message contenant le certificat.

Ainsi, à ce moment de l'échange :
- Bob, le client, a la certitude d'être connecté au serveur d'Alice ;
- le serveur d'Alice ne sait pas grand-chose du client connecté, mais ce n'est pas grave dans le sens où le serveur est prêt à discuter avec des clients déjà inscrits ou même avec de nouveaux clients.

La suite de l'échange va permettre à l'ordinateur de Bob d'échanger ou d'établir (selon le mécanisme de cryptographie asymétrique choisi mais non détaillé ici) avec le serveur d'Alice une clé secrète symétrique 218. Une fois la clé secrète symétrique en possession de l'ordinateur de Bob et du serveur d'Alice, ils vont pouvoir échanger des données qui seront chiffrées et authentifiées via des mécanismes de cryptographie symétrique. Bob peut à ce moment-là et en toute confidentialité, rentrer ses identifiants 220 - son login et son mot de passe - pour s'authentifier auprès du serveur comme client déjà inscrit, et accéder à son compte client personnel.

Dans cette configuration :
- Bob est certain d'être connecté au serveur d'Alice ;
- le serveur d'Alice est certain d'être connecté à l'ordinateur de Bob ;
- le serveur d'Alice et l'ordinateur de Bob disposent d'une clé secrète commune qui leur permet de s'échanger des informations confidentielles et authentifiées sans pour autant qu'Alice ait eu besoin de physiquement rencontrer Bob pour partager la clé secrète.

L'authentification mutuelle initiale a ainsi été réalisée par :
- l'envoi à Bob, du certificat d'Alice signé par l'AC au tout début de la communication ;
- l'envoi des identifiants de connexion de Bob, une fois le canal sécurisé établi avec la clé secrète partagée.

En résumé, trois étapes sont requises pour la mise en place d'une communication entièrement sécurisée entre un client (B) et un serveur (A) sur internet. Une première étape d'authentification mutuelle initiale par échange de certificats signés qui sont contresignés via la clé publique d'une AC reconnue. Les échanges sont eux-mêmes signés/contresignés avec les clés publiques/privées de A et B. Une seconde étape d'échange de la clé secrète avec authentification mutuelle par signature/contresignature avec les clés privées/publiques authentifiées de A et B. Une troisième étape de communication sécurisée avec authentification mutuelle par chiffrement/déchiffrement symétrique des résumés de messages basés sur une fonction de hachage à sens unique.

Il ressort que toutes les étapes font intervenir un mécanisme d'authentification mutuelle. L'authentification de la source est ainsi primordiale et doit être garantie du tout premier contact (i.e. authentification mutuelle initiale) jusqu'au dernier échange, dans toute communication sécurisée. Lors des échanges, qui sont tous sécurisés avec la clé secrète symétrique partagée, l'authenticité des messages (authentification de la source et intégrité) est assurée par la cryptographie à clé secrète symétrique couplée à une fonction de hachage à sens unique qui prend le relais jusqu'à la fin de la communication.

Cet exemple montre qu'une infrastructure PKI n'est pas en soi beaucoup plus simple qu'une infrastructure SKI. Néanmoins, pour l'utilisateur final, une PKI est bien plus simple à gérer. Dans l'exemple de l'ordinateur de Bob qui se connecte au serveur d'Alice, Bob n'a simplement qu'à bien gérer son login et son mot de passe. Tout le reste du processus est géré, à son insu, par l'infrastructure des certificats déployés en amont dans le serveur d'Alice et dans l'explorateur internet de l'ordinateur de Bob. A chaque fois que Bob se connecte à un serveur sur internet, il fait intervenir, sans le savoir, des mécanismes cryptographiques d'une rare complexité dont le seul objet est de sécuriser sa connexion et de lui simplifier la tâche.

La présente invention d'application au domaine spatial, vise à permettre à des opérateurs de solutions spatiales, de gérer de manière simple, la sécurisation des liens bord-sol entre leur segment sol de contrôle et leur(s) satellite(s).

De manière générale, le dispositif de l'invention est basé sur une infrastructure de gestion de clés à clés publiques, e.g. de type PKI, avec un intermédiaire de certificats signés numériquement.

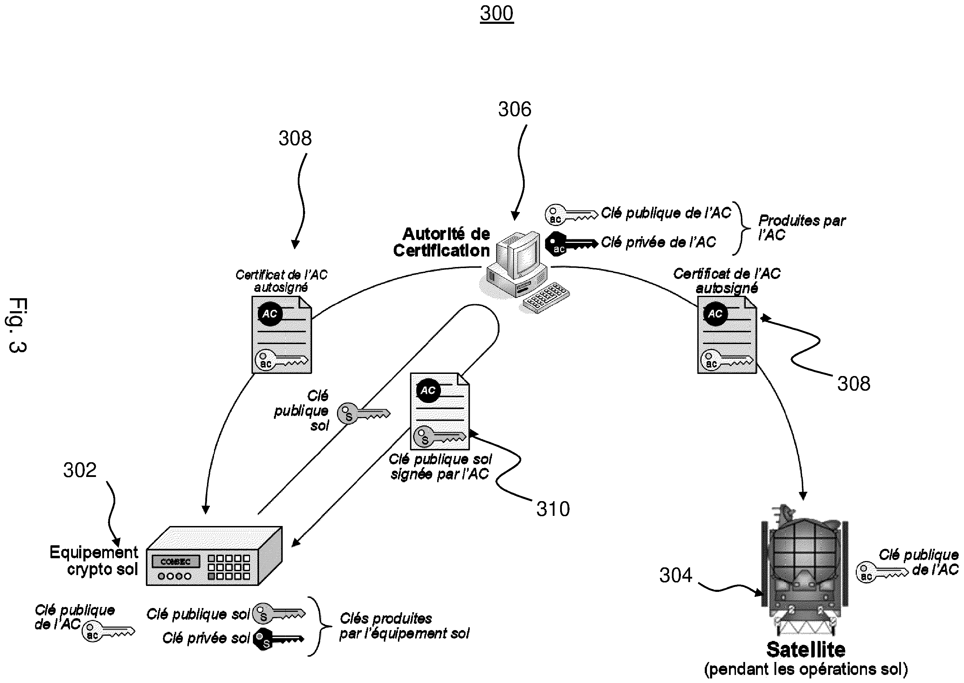

La figure 3 est une illustration schématique d'une infrastructure 300 de gestion de clés à clés publiques pour les communications de systèmes spatiaux, selon un mode de réalisation de l'invention, qui permet de « mettre à la clé » un segment sol de contrôle 302 et un satellite 304.

L'expression « mettre à la clé » désigne le fait d'arriver à ce que les deux parties prenantes dans une communication partagent la même clé secrète symétrique qui leur permettra d'assurer la sécurité de leurs communications.

Le système spatial est dit « fermé » et « privé » dans le sens où les destinataires (le segment sol de contrôle et le satellite) des certificats contenants les clés publiques sont identifiés à l'avance et n'évoluent pas dans le temps. Le système spatial considéré est « statique » et n'évolue pas dans le temps, a contrario d'un système ouvert comme peut l'être internet.

Dans l'exemple, pour des raisons de simplification de l'illustration, une autorité d'enregistrement de clés est confondue avec une autorité de certification 306, les fonctions de l'autorité d'enregistrement de clés étant prises en charge par l'autorité de certification AC (i.e. sur un dispositif implémentant les fonctions d'une autorité de certification).

La mise en place de l'infrastructure de gestion de clés à clés publiques selon l'invention permet de déployer des certificats dans l'équipement cryptographique sol 302 et dans le satellite au sol 304, avantageusement sans qu'aucun des éléments déployés ne soit confidentiel.

Le procédé mis en oeuvre pour déployer les certificats consiste en une succession des étapes suivantes :
- une étape où l'AC 306 produit son propre couple de clés publique/privée (clé publique AC / clé privée AC) ;
- une étape où l'AC 306 constitue un certificat 308 contenant sa clé publique, certificat auto-signé avec sa clé privée qui est connue d'elle seule ;
- une étape où le certificat auto-signé 308 de l'AC 306 est transmis d'une part à l'équipement cryptographique sol 302 et d'autre part à la fonction cryptographique présente dans le satellite 304 au sol ;
- une étape où l'équipement cryptographique sol 302 produit son propre couple de clés publique/privée (clé publique sol / clé prive sol) ;
- une étape où la clé publique sol de l'équipement cryptographique sol est transmise à l'AC qui l'intègre dans un certificat qui est signé avec la clé privée de l'AC ;
- une étape où le certificat signé 310 contenant la clé publique de l'équipement cryptographique sol est transmis par l'AC à l'équipement cryptographique sol.

L'homme du métier comprend que la mise en oeuvre de chaque étape peut être opérée par des techniques connues telles que décrites précédemment pour une infrastructure de type PKI.

Cette phase préliminaire de déploiement de l'infrastructure PKI qui se déroule avant le lancement du satellite, permet que l'équipement cryptographique sol dispose (a) d'une clé privée sol qui lui est propre et qui doit rester confidentielle, et (b) de son certificat qui contient sa clé publique sol et qui est signé par l'AC.

Cette phase préliminaire de déploiement de l'infrastructure PKI qui se déroule avant le lancement du satellite, permet aussi que l'équipement cryptographique satellite dispose du certificat auto-signé de l'AC qui contient la clé publique AC de l'AC. Ceci lui permettra de contresigner (i.e. d'authentifier) les messages reçus du segment sol (ceux signés avec la clé privée sol).

Ainsi par cette phase préliminaire, les deux seuls éléments sensibles qui doivent rester confidentiels, sont la clé privée AC de l'autorité de certification (qui se trouve au niveau de l'AC), et la clé privée sol de l'équipement sol (qui se trouve au niveau de l'équipement sol).

Avantageusement, aucun des éléments sensibles n'est, à aucun moment, transporté d'un équipement à un autre. Ceci permet de minimiser les risques de compromission liés à la manipulation d'éléments sensibles et confidentiels.

Le satellite n'a donc pas embarqué, avant le tir, un élément secret sensible qui nécessiterait d'être garanti en confidentialité pendant toute la séquence de préparation au tir au sol.

Le déploiement initial des certificats dans le satellite et au niveau du segment sol de contrôle selon le procédé décrit, garantit qu'un tiers (i.e. Eve) ne pourra jamais se faire passer pour le centre de contrôle et donc prendre le contrôle de satellite.

Une fois l'infrastructure PKI entièrement déployée, le satellite est dépourvu d'élément sensible. Le satellite n'a donc pas embarqué de secret initial avant sa mise en orbite.

Après la phase préliminaire, le satellite est mis en orbite. Un autre objet de l'invention est relatif à l'authentification entre un segment sol de contrôle et un satellite en orbite dont les certificats respectifs ont été initialement déployés selon le procédé de l'invention décrit pour la phase préliminaire.

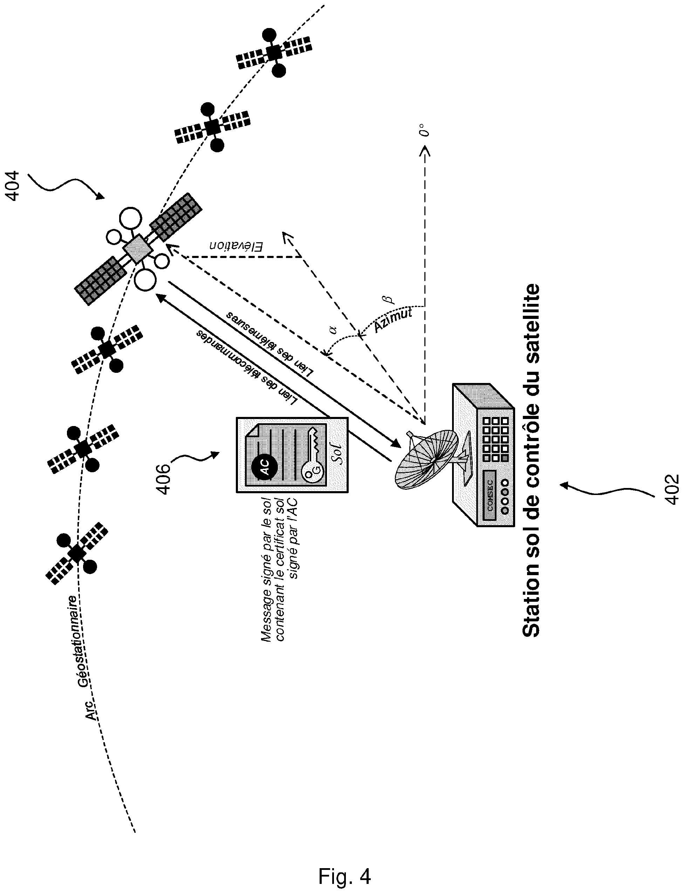

La figure 4 illustre de manière schématique le principe général du procédé d'authentification selon un mode de réalisation de l'invention. Les inventeurs désignent le principe par l'acronyme KARMAH pour « Key negotiAtion pRotocol with semi-Mutual AutHentication » en anglais, ou protocole de négociation de clés avec une authentification semi-mutuelle.

Un segment sol de contrôle 402 qui dispose (a) d'une clé privée sol et (b) de son certificat signé par une autorité de certification et qui contient sa clé publique sol (par la mise en place dans une phase préliminaire de l'infrastructure PKI selon l'invention), souhaite authentifier un satellite 404 en orbite, qui lui dispose d'un certificat auto-signé de la même autorité de certification et qui contient la clé publique AC de l'autorité de certification (toujours par la mise en place dans une phase préliminaire de l'infrastructure PKI selon l'invention).

Avantageusement, au lieu d'utiliser un secret initial pour authentifier le satellite comme dans les solutions de l'art antérieur, le segment sol de contrôle s'appuie sur des paramètres publics non confidentiels liés au satellite lui-même.

Différents types de paramètres publics peuvent être pris en compte par le segment sol de contrôle. On peut ainsi nommer, les exemples suivants :
- des éphémérides de satellite, c'est-à-dire des paramètres liés à sa position orbitale, comme le sont l'azimut et l'élévation dans le cas d'un satellite géostationnaire, et tel qu'illustré sur la figure 4 ;
- des caractéristiques d'un signal modulé émis par un émetteur de télémesure ou par une balise du satellite visé. Ces caractéristiques de modulation sont désignées par le terme (RFF) pour « Radio Frequency Fingerprint » en anglais ou empreinte RF ;
- un doppler d'un signal modulé descendant, dans le cas de satellites défilants (en orbite terrestre basse ou (LEO) pour « Low Earth Orbit » en anglais) ;
- une signature thermique du satellite (sous condition que la station sol dispose d'un détecteur infrarouge suffisamment précis pour effectuer ce type de mesure).

Les paramètres physiques permettent, au segment sol de contrôle 402, d'authentifier de façon certaine le satellite 404 avec lequel il souhaite établir une communication sécurisée.

En effet, concernant les éphémérides, des organismes nationaux et internationaux, tels que les agences spatiales ou le commandement de la défense aérospatiale de l'Amérique du Nord (NORAD) pour « North American Aerospace Defense Command », sont chargés de cartographier le ciel vis-à-vis des objets en orbites. Il est donc impossible de positionner en orbite un satellite sans qu'il soit répertorié et caractérisé du point de vue de ses éphémérides.

L'authentification selon l'invention est dite semi-mutuelle, en ce que sur le canal de communication, seul le segment sol de contrôle s'authentifie par un moyen cryptographique vis-à-vis du satellite.

Le segment sol de contrôle 402 après avoir authentifié le satellite par un ou plusieurs paramètres physiques, lui envoie un message sol (406) signé avec sa clé privée sol qui contient son certificat sol signé par l'AC, et sa clé publique sol.

Le satellite, lorsqu'il reçoit le certificat envoyé par le segment sol de contrôle, peut l'authentifier à l'aide de la clé publique AC de l'AC qu'il possède déjà. Ceci permet de résoudre l'authentification initiale du sol par le satellite, et permet au satellite d'authentifier formellement la source du message qui contient le certificat.

Une fois que le satellite 404 possède la clé publique du segment sol, la communication pour les échanges ou pour l'établissement d'une clé secrète peuvent débuter.

Les messages montants sont authentifiés à bord du satellite via la signature avec la clé privée sol et la contresignature avec la clé publique à bord.

Pour les messages descendants, c'est la position orbitale du satellite (ou tout autre moyen physique lié au satellite) qui en authentifie la source.

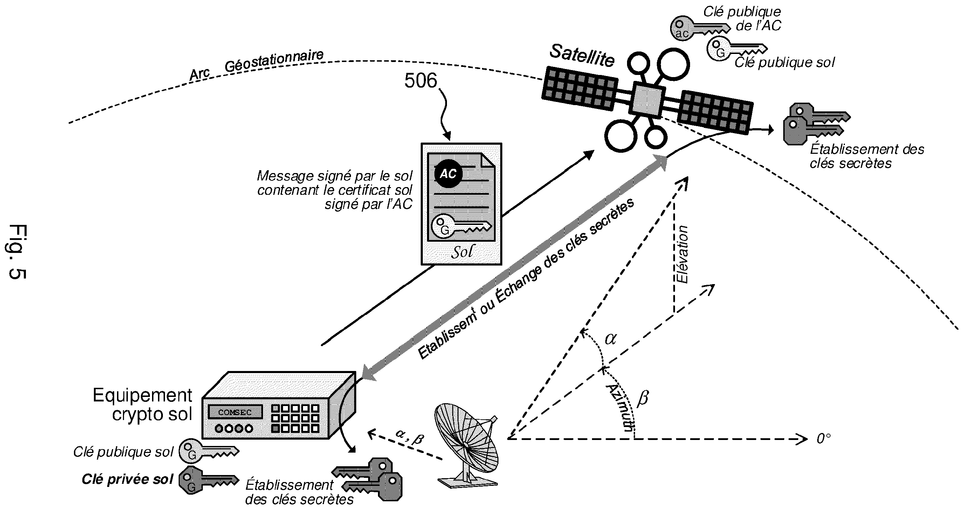

La figure 5 illustre de manière schématique l'établissement ou l'échange de clés secrètes entre un segment sol de contrôle 502 et un satellite 504, selon un mode de réalisation de l'invention.

Dans cette phase d'établissement ou d'échange d'une clé secrète entre le satellite et le centre de contrôle sol, les messages envoyés par le centre de contrôle sol sont signés avec la clé privée du centre de contrôle sol et contresignés par le satellite avec la clé publique du centre de contrôle sol. Le satellite en orbite, source des messages envoyés au centre de contrôle au sol, est authentifié par une de ses caractéristiques physiques, ce qui authentifie implicitement les messages envoyés par le satellite au centre de contrôle au sol.

Avantageusement, différents protocoles d'échange de clés de type mécanisme d'encapsulation de clé ou (KEM) pour « Key Encapsulation Mechanism » en anglais, peuvent être utilisés pour transmettre de manière sûre une clé de session au moyen d'un canal non sécurisé.

Plus généralement, tous les mécanismes asymétriques de signature, d'échange de clés ou d'établissement des clés utilisés peuvent indifféremment être basés sur des algorithmes asymétriques pré-quantiques (RSA, DSA, Diffie-Hellman, courbes elliptiques, etc. ou sur des algorithmes asymétriques post-quantiques (CRYSTAL-KYBER, CRYSTAL DILITHIUM, FALCON, SPHINCS+, etc.).

Dans un mode de réalisation, le mécanisme d'échange de clés consiste en ce que :
- le satellite 504 génère des clés secrètes symétriques (qui vont ensuite être utilisées pour sécuriser les liens TM/TC bord-sol) ;
- le satellite 504 chiffre les clés secrètes symétriques avec la clé publique sol du segment sol de contrôle 502 ;
- le satellite 504 envoie les clés secrètes chiffrées au segment sol de contrôle 502 ;
- le segment sol de contrôle 502 reçoit les clés secrètes chiffrées et authentifie l'origine de cette clé via la position orbitale du satellite 504 émetteur des clés chiffrées ;
- le segment sol de contrôle 502 déchiffre les clés secrètes avec sa clé privée sol ;
- le segment sol de contrôle 502 et le satellite 504 partagent un même jeu de clés secrètes qui leur permet alors d'effectuer les échanges TM/TC qui sont sécurisés (confidentialité et authenticité des messages) grâce aux clés secrètes partagées.

Selon d'autres modes de réalisation, des protocoles d'établissement de clés de type « Key Agreement » ou « Key Negotiation » peuvent être utilisés.

Ainsi, dans une réalisation particulière :
- le satellite génère un couple d'éléments public et privé (selon les protocoles d'établissement de clé basés sur des mécanismes asymétriques de type Diffie-Hellman qui ne sont pas détaillés ici) ;
- le segment sol de contrôle génère un couple d'éléments public et privé ;
- le satellite envoie au segment sol de contrôle son élément public ;
- le segment sol de contrôle envoie au satellite son élément public ;
- le segment sol de contrôle (sol) et le satellite (bord) appliquent une fonction 'F' identique sur les éléments dont ils disposent (publics et privé) pour aboutir au même secret `K' commun.

La fonction 'F' pour le sol est de type :
F[élément public sol, élément public bord, élément privé sol] = Clé secrète K partagée sol-bord.

La fonction 'F' pour le bord est de type :
F[élément public sol, élément public bord, élément privé bord] = Clé secrète K partagée sol-bord.

Le segment sol de contrôle et le satellite partagent alors une même clé secrète K qui leur permet d'effectuer les échanges TM/TC qui sont sécurisés (confidentialité et authenticité des messages) grâce à la clé secrète partagée.

Les protocoles d'établissement de clé (ou de négociation de clé) basent la génération de la clé secrète par l'échange d'éléments éphémères publics qui sont renouvelés à chaque fois qu'une nouvelle clé secrète doit être établie.

Les protocoles d'échange de clé (ou d'encapsulation de clé KEM) requièrent l'emploi du couple clé privée/clé publique du segment sol pour chiffrer/déchiffrer la clé secrète échangée entre le bord et le sol. La bi-clé du segment sol étant un élément persistant, elle ne permet pas de garantir l'indépendance des clés secrètes dont la sécurité dépend de la clé privée présente au niveau du segment sol. Aussi, les protocoles d'établissement de clé sont préférés aux protocoles d'échange de clé.

Ainsi, il a été décrit un procédé où l'intégrité du certificat de l'autorité de certification est assurée par une fonction de hachage à sens unique sans clé. Lorsque l'AC produit son certificat auto-signé, elle le passe au travers d'une fonction de hachage sûre pour produire un résumé de référence. Ce résumé de référence permet de vérifier à des instants clés de la vie du satellite (juste avant le tir, juste après la mise à poste, avant la transmission du certificat du sol au satellite, etc..) que le certificat de l'AC, à bord du satellite, est toujours intègre. Le bord calcule, sur demande, le résumé du certificat avec la même fonction de hachage à sens unique sans clé que celle qui a été utilisée lors du calcul du résumé de référence par l'AC. Le sol peut comparer le résumé calculé par le bord au résumé de référence pour constater que le certificat de l'AC qui est à bord est bien intègre et qu'il n'est pas corrompu.

## Revendications

1. Procédé de gestion de clés pour établir des communications sécurisées entre un centre de contrôle sol (402) et un satellite en orbite (404), le procédé comprenant des étapes consistant :
- dans une phase où le satellite est au sol, à opérer un protocole de cryptographie asymétrique avec une autorité de certification (306), permettant de déployer :
- sur un équipement cryptographique (302) du centre de contrôle sol, une clé privée sol et un certificat (310) signé par l'autorité de certification, contenant une clé publique sol ; et
- sur un équipement cryptographique (304) du satellite au sol, un certificat (308) auto-signé par l'autorité de certification, contenant une clé publique AC de l'autorité de certification, tel qu'aucun élément secret initial n'a besoin d'être embarqué sur le satellite au sol ;
- dans une phase où le satellite est en orbite, à opérer un protocole d'authentification semi-mutuelle, entre le centre de contrôle sol et le satellite en orbite, consistant :
- pour l'équipement cryptographique du centre de contrôle sol : à authentifier le satellite par une ou plusieurs caractéristiques physiques identifiant le satellite ; à envoyer vers ledit satellite authentifié, un message (406) signé avec la clé privée sol, ledit message contenant le certificat auto-signé par l'autorité de certification et la clé publique sol ; et
- pour l'équipement cryptographique du satellite en orbite : à authentifier le certificat reçu de l'équipement cryptographique du centre de contrôle sol, à l'aide de la clé publique AC de l'autorité de certification.

2. Procédé selon la revendication 1 dans lequel l'étape d'opérer un protocole de cryptographie asymétrique avec une autorité de certification (306), comprend :
- une étape où l'autorité de certification produit une paire de clés AC publique/privée (clé publique AC, clé privée AC) ;
- une étape où l'autorité de certification constitue un certificat auto-signé avec ladite clé privée AC, et contenant ladite clé publique AC ; et
- une étape où ledit certificat auto-signé (308) est transmis d'une part à l'équipement cryptographique sol (302) et d'autre part à l'équipement cryptographique (304) du satellite au sol.

3. Procédé selon la revendication 2 comprenant de plus :
- une étape où l'équipement cryptographique sol (302) : produit une paire de clés sol publique/privée (clé publique sol, clé privée sol) ; et transmet ladite clé publique sol à l'autorité de certification (306) ;
- une étape où l'autorité de certification (306) : intègre la clé publique sol reçue dans un certificat ; le signe avec ladite clé privée AC ; et transmet le certificat signé (310) à l'équipement cryptographique sol.

4. Procédé selon l'une quelconque des revendications précédentes dans lequel l'autorité de certification est apte à opérer des fonctions d'enregistrement de clés.

5. Procédé selon l'une quelconque des revendications précédentes dans lequel l'étape d'authentifier le satellite par une ou plusieurs caractéristiques physiques, consiste à authentifier ledit satellite par ses éphémérides, en authentifiant des paramètres liés à sa position orbitale, notamment l'azimut et l'élévation.

6. Procédé selon l'une quelconque des revendications précédentes dans lequel l'étape d'authentifier le satellite par une ou plusieurs caractéristiques physiques, consiste à authentifier ledit satellite par des caractéristiques d'un signal modulé émis par un émetteur de télémesure ou par une balise du satellite visé.

7. Procédé selon l'une quelconque des revendications précédentes dans lequel l'étape d'authentifier le satellite par une ou plusieurs caractéristiques physiques, consiste à authentifier ledit satellite par un doppler d'un signal modulé descendant.

8. Procédé selon l'une quelconque des revendications précédentes dans lequel l'étape d'authentifier le satellite par une ou plusieurs caractéristiques physiques, consiste à authentifier ledit satellite par une signature thermique du satellite.

9. Procédé selon l'une quelconque des revendications précédentes comprenant de plus, après l'authentification semi-mutuelle entre le centre de contrôle sol et le satellite en orbite, des étapes consistant en l'établissement ou l'échange de clés secrètes entre le centre de contrôle sol (502) et le satellite authentifié (504).

10. Programme d'ordinateur comprenant des instructions de code permettant d'effectuer les étapes du procédé selon l'une quelconque des revendications précédentes, lorsque ledit programme est exécuté sur un système comprenant un centre de contrôle sol (302) et un satellite (304).

11. Système comprenant un dispositif de gestion de clés, un centre de contrôle sol (402) et un satellite (404), ledit dispositif de gestion de clés permettant l'établissement de communications sécurisées entre un centre de contrôle et un satellite en orbite, tel qu'aucun élément secret initial n'a besoin d'être embarqué sur le satellite au sol, le système comprenant des moyens pour mettre en oeuvre les étapes du procédé selon l'une quelconque des revendications de procédé précédentes.
